# EUROPEAN PATENT SPECIFICATION

(11) **EP 4 440 045 B1**
(45) Date of publication and mention of the grant of the patent: **04.02.2026**
(21) Application number: 24164201.6
(22) Date of filing: 18.03.2024
(51) Int. Cl.: H04W 8/00, H04W 12/50, H04W 84/12, G06F 3/12, H04W 48/16, H04L 9/40

(54) **INFORMATION PROCESSING APPARATUS, CONTROL METHOD, AND PROGRAM**
INFORMATIONSVERARBEITUNGSGERÄT, STEUERVERFAHREN UND PROGRAMM
APPAREIL DE TRAITEMENT DE L'INFORMATION, MÉTHODE DE CONTRÔLE ET PROGRAMME

(30) Priority: 29.03.2023 JP 2023053293
(43) Date of publication of application: 02.10.2024
(73) Proprietor: Canon Kabushiki Kaisha, Ohta-ku Tokyo 146-8501 (JP)
(72) Inventor: TAKEUCHI, Takuya, 146-8501 Tokyo (JP)
(74) Representative: Canon Europe Limited

(56) References cited:
- US-A1- 2019 050 186
- US-A1- 2022 011 992
- US-A1- 2023 061 893

## Description

### BACKGROUND OF THE INVENTION

### Field of the Invention

The present invention relates to an information processing apparatus, a control method, and a program.

### Description of the Related Art

Technologies by which an information processing apparatus transmits information for connecting to a network to a communication apparatus and the communication apparatus connects to the network using the information are known.

Japanese Patent Application Laid-Open No. 2020-123810 discusses a technique in which an external device transmits setting information for wireless communication to a communication apparatus and the communication apparatus performs wireless communication settings based on the setting information.

Meanwhile, as the technologies by which an information processing apparatus transmits information for connecting to a network to a communication apparatus become widespread, there is a growing demand for a control to transmit more appropriate information for connecting to a network.

The present invention is directed to a control to transmit more appropriate information for connecting to a network.

Related art US2019050186, US2023061893, US2022011992 relate to methods for connecting a printing apparatus to an access point.

### SUMMARY OF THE INVENTION

According to a first aspect of the present invention, there is provided a program as specified in claim. 1. Preferable features are specified in claims 2 to 13. According to a second aspect of the present invention, there is provided a control method for an information processing apparatus as specified in clam 14. According to a third aspect of the present invention, there is provided an information processing apparatus as specified in claim 15. Preferable features of the first aspect of the present invention may be preferable features of the second and/or third aspect of the present invention.

Further features of the present invention will become apparent from the following description of embodiments with reference to the attached drawings.

### BRIEF DESCRIPTION OF THE DRAWINGS

Figs. 1A and 1B are schematic diagrams each illustrating a communication system.
Fig. 2 is a diagram illustrating an example of a hardware configuration of each apparatus according to an embodiment of the present invention.
Fig. 3 is a diagram illustrating an example of a software configuration of an information processing apparatus according to an embodiment of the present invention.
Fig. 4 (consisting of Figs. 4A and 4B) is a flowchart according to a first embodiment of the present invention.
Fig. 5 is a diagram illustrating an example of setting target information and support information according to an aspect of the present invention.
Fig. 6 is a diagram illustrating an example of a confirmation screen according to an aspect of the present invention.
Fig. 7 is a diagram illustrating an example of a reception screen according to an aspect of the present invention.
Fig. 8 (consisting of Figs. 8A and 8B) is a flowchart according to a second embodiment of the present invention.
Fig. 9 is a diagram illustrating an example of table information according to an aspect of the present invention.
Fig. 10 is a diagram illustrating an example of a confirmation screen according to an aspect of the present invention.
Fig. 11 (consisting of Figs. 11A and 11B) is a flowchart according to a third embodiment of the present invention.

### DESCRIPTION OF THE EMBODIMENTS

Various embodiments of the present invention will be described in detail below with reference to the accompanying drawings. It is to be noted that the embodiments described below are not intended to limit the claimed invention and that not all combinations of features according to the embodiments described below are always essential to a technical solution provided by the present invention. Each embodiment of the present invention described below can be implemented solely or as a combination of a plurality of the embodiments or features thereof where necessary or where the combination of elements or features from individual embodiments in a single embodiment is beneficial.

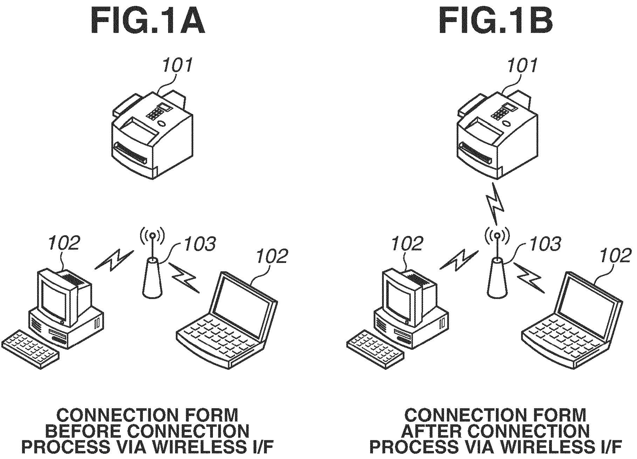

A communication system according to an aspect of the present invention will be described below with reference to Figs. 1A and 1B, the communication system including an information processing apparatus, a router apparatus, and a printer.

Fig. 1A illustrates a state where information processing apparatuses 102 and a router apparatus (access point) 103 are connected via a wireless local area network (wireless LAN). In this state, the information processing apparatuses 102 each have a wireless LAN communication function, and the communication in a connection setting process is performed wirelessly. Fig. 1B illustrates a state after a wireless connection process is performed from the state illustrated in Fig. 1A. In this state, a printer 101 is wirelessly connected to the router apparatus 103.

According to the present embodiment, various information processing apparatuses, such as smartphones, mobile phones, personal computers (PCs), tablet terminals, personal digital assistants (PDAs), and digital cameras are applicable to an information processing apparatus included in the communication system according to the present embodiment. While the printer 101 is described as an example of a communication apparatus of the communication system according to the present embodiment, the communication apparatus is not limited to the printer 101, and various apparatuses capable of wirelessly communicating with the information processing apparatus 102 are applicable. For example, printers, such as inkjet printers, full-color laser beam printers, and monochrome printers, are applicable. Not only printers but also copy machines, facsimile apparatuses, mobile terminals, smartphones, PCs, tablet terminals, PDAs, digital cameras, music reproduction devices, televisions, and smart speakers are applicable. Multi-function peripherals with a plurality of functions, such as copy, fax, and print functions, are also applicable.

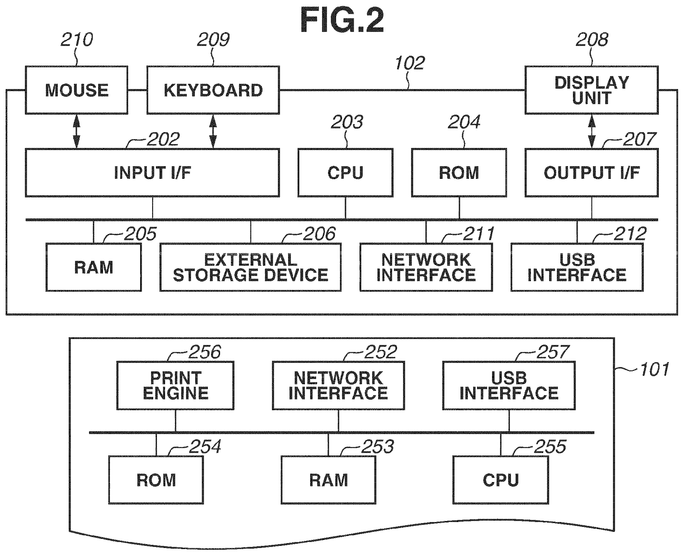

Next, hardware configurations of the printer 101 and the information processing apparatus 102 will be described below with reference to Fig. 2.

The information processing apparatus 102 includes an input interface (input I/F) 202, a central processing unit (CPU) 203, a read-only memory (ROM) 204, a random access memory (RAM) 205, an external storage device 206, an output interface (output I/F) 207, a display unit 208, a keyboard 209, a mouse 210, a network interface 211, and a universal serial bus (USB) interface 212. The network interface 211 controls wireless communication and communication processing. The network interface controls communication and communication processing via a communication medium in a local area network (LAN), for example, cables in a wired local area network (wired LAN) or electromagnetic waves in a wireless local area network (wireless LAN). The USB interface 212 controls USB connection via USB cables. The ROM 204 stores an initialization program, and the external storage device 206 stores application programs, an operating system (OS), printer drivers, and various data. The RAM 205 is used as a work memory by various programs stored in the external storage device 206. An embodiment in which Microsoft Windows^{®} is used as an OS will be described below as an example.

The printer 101 includes a network interface 252, a RAM 253, a print engine 256, a ROM 254, and a CPU 255. The network interface 252 controls wireless communication and communication processing via wired LAN cables.

A USB interface 257 controls USB connection via USB cables. The RAM 253 is used as a main memory and a work memory of the CPU 255 and stores a reception buffer for temporarily storing received print jobs and received print data and stores various data. The print engine 256 performs printing based on data stored in the RAM 253. The ROM 254 stores various control programs and data for use by the control programs, and the CPU 255 controls the components of the printer 101 in accordance with the control programs.

While the processing distribution between the information processing apparatus 102 and the printer 101 is described above as an example, this distribution embodiment is not restrictive, and other embodiments may be employed.

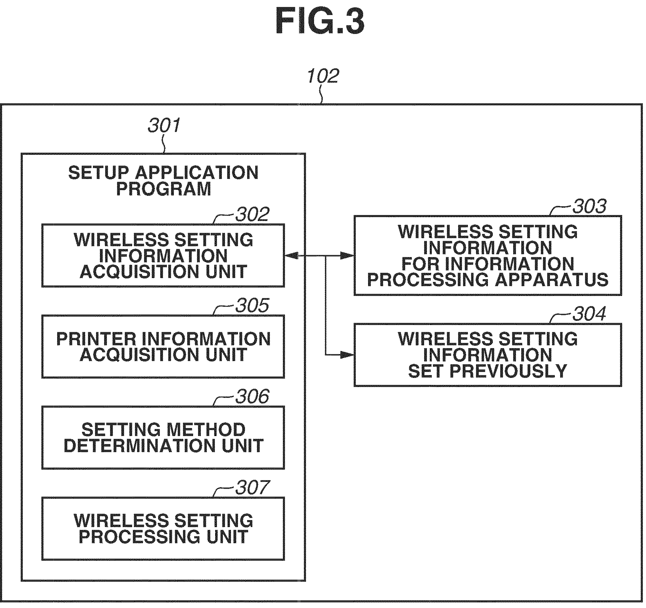

Next, a software configuration according to the present embodiment will be described below with reference to Fig. 3. As illustrated in Fig. 3, the information processing apparatus 102 includes a setup application program (hereinafter, "setup application") 301. The setup application 301 includes a wireless setting information acquisition unit 302. The wireless setting information acquisition unit 302 acquires setting target information to be used for a wireless setting, from wireless setting information 303 that is used by the information processing apparatus 102 or wireless setting information 304 that has been set previously. The setup application 301 further includes a printer information acquisition unit 305. The printer information acquisition unit 305 acquires various information from the printer 101 through communication processes. The setup application 301 further includes a setting method determination unit 306 and a wireless setting processing unit 307. The setting method determination unit 306 determines an appropriate setting method based on the setting target information acquired by the wireless setting information acquisition unit 302 and the information acquired from the printer 101. The wireless setting processing unit 307 makes the wireless setting based on the setting method determined by the setting method determination unit 306. Embodiments of the setup application 301 will be described below with reference to flowcharts.

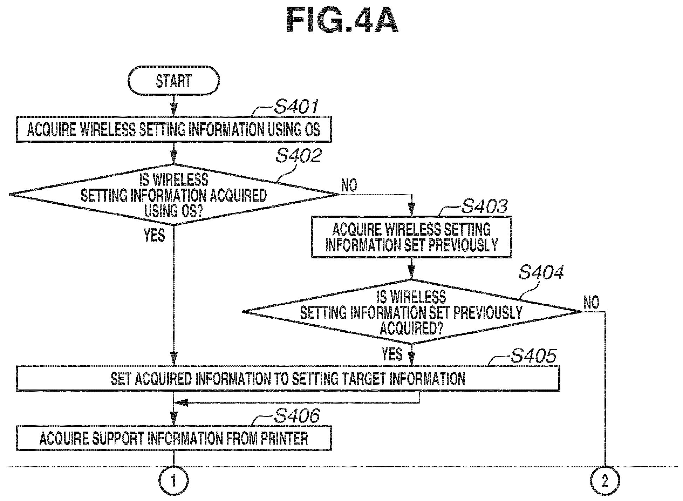

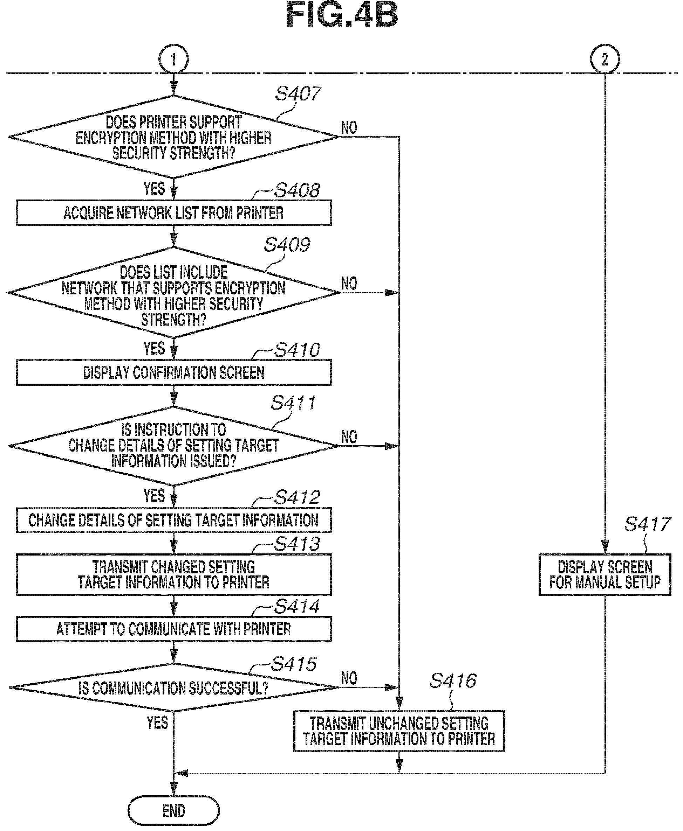

A first embodiment of the present invention will be described in detail below with reference to Figs. 4 (consisting of 4A and 4B), 5, 6, and 7. A setup example in which the information processing apparatus 102 performs a setup on the printer 101 with security strength of the printer 101 reflected will be described below in the present embodiment.

Fig. 4 (consisting of Figs. 4A and 4B) is a flowchart illustrating a process in which the information processing apparatus 102 connects the printer 101 to a wireless LAN router. The process is realized by the CPU 203 loading a program stored in the ROM 204 or the external storage device 206 into the RAM 205 and executing the program.

Specifically, the process is performed based on a program stored as the setup application 301 in the external storage device 206. Hereinafter, a process performed by the setup application 301 is, in practice, a process realized by the CPU 203 executing the setup application 301. The process is initiated based on the setup application 301 having detected the execution of a trigger process that serves as a trigger for the process. Specific examples of a trigger process that serves as a trigger for the process include a process of activating the setup application 301 and a process of receiving predetermined input on a screen displayed by the setup application 301.

Initially, in step S401, the setup application 301 attempts to acquire the wireless setting information about a network to which the information processing apparatus 102 is connected and that is formed by the router apparatus using an application program interface (hereinafter, "API") of the OS. More specifically, the network to which the information processing apparatus 102 is connected is the network to which the information processing apparatus 102 is connected at the time of performing the trigger process that serves as a trigger for the process. The wireless setting information is used to connect to the network and indicates settings for use in communicating with the network. Specifically, for example, the wireless setting information includes information indicating a service set identifier (hereinafter, "SSID") of the network, a passphrase (password) for connecting to the network, an encryption method that is used by the network, and a frequency band that is used by the network. Specifically, the settings for use in communicating with the network are, for example, an encryption method setting and a frequency band setting. In some forms, a passphrase for connecting to a network cannot be acquired from the OS. In such forms, the setup application 301 displays a screen to prompt a user to input a passphrase and acquires the passphrase input to the screen.

Next, in step S402, the setup application 301 determines whether the wireless setting information is acquired in step S401. In a case where a determination result indicates YES (YES in step S402), the processing proceeds to step S405. In step S405, the wireless setting information acquired in step S401 is set and managed as setting target information. The setting target information is to be transmitted to the printer 101 and is information to be used for the wireless setting of the printer 101. In a case where the determination result indicates is NO (NO in step S402), the processing proceeds to step S403.

In step S403, the setup application 301 attempts to acquire wireless setting information transmitted previously as setting target information to another printer different from the printer 101. In a case where there is wireless setting information that the setup application 301 has been transmitted previously to another printer different from the printer 101, the setup application 301 stores the wireless setting information. Since wireless setting information transmitted previously to another printer different from the printer 101 includes a passphrase, it is unnecessary to display the screen for prompting the user to input a passphrase in this case.

In step S404, the setup application 301 determines whether wireless setting information transmitted previously as setting target information to another printer different from the printer 101 is acquired. In a case where the determination result indicates YES (YES in step S404), the processing proceeds to step S405. In step S405, the wireless setting information acquired in step S403 is set and managed as setting target information. In a case where the determination result indicates NO (NO in step S404), the processing proceeds to step S417. In step S417, a screen for manual setup is displayed. The manual setup according to the present embodiment is a method in which the user inputs wireless setting information to the printer 101 and the printer 101 connects to a network corresponding to the input wireless setting information. Thus, the screen displayed in step S417 may be a screen that prompts the user to connect the printer 101 and the network to each other with an operation on the printer 101. In step S417, a method in which wireless setting information input manually to the information processing apparatus 102 by the user is set as setting target information may be used. In such a case, a screen for inputting the wireless setting information may be displayed at this time, and the processing may proceed to step S405 after step S417. At this time, the wireless setting information input to the screen displayed in step S417 is set to setting target information in step S405. Other processes different from the above-described process may be performed in step S417. Specifically, for example, the setup application 301 may acquire a list as in step S408 described below, display the list, set information for connecting to a network selected from the list by the user to the setting target information, and transmit the information to the printer 101.

In step S405, the setup application 301 sets the setting target information, stores the setting target information, and thereafter establishes a Wi-Fi^{®} connection between the information processing apparatus 102 and the printer 101. Specifically, in a case where the information processing apparatus 102 is Wi-Fi connected to the network formed by the wireless LAN router 103, the setup application 301 disconnects the Wi-Fi connection and thereafter establishes a Wi-Fi connection between the information processing apparatus 102 and the printer 101. The setup application 301 stores in advance information for Wi-Fi connecting to the printer 101, such as the SSID of the network formed by the printer 101. While the form in which a Wi-Fi connection is described to be established as a connection between the information processing apparatus 102 and the printer 101, this is not a limiting form. For example, a connection between the information processing apparatus 102 and the printer 101 may be established using a communication standard, such as Bluetooth^{®}.

Bluetooth^{®} includes Bluetooth^{®} Low Energy and Classic Bluetooth^{®}. In a case of this form, a connection is established between the information processing apparatus 102 and the printer 101 while a Wi-Fi connection between the information processing apparatus 102 and the network formed by the wireless LAN router 103 is maintained without being disconnected. Hereinafter, the information processing apparatus 102 and the printer 101 communicate with each other via the connection established as described above between the information processing apparatus 102 and the printer 101.

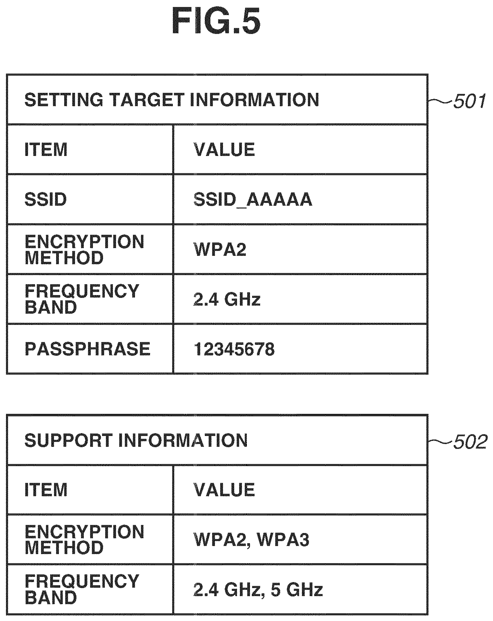

Thereafter, in step S406, the setup application 301 acquires support information from the printer 101. The support information indicates Wi-Fi communication capabilities supported by the printer 101. Specifically, for example, the support information includes information indicating frequency bands available for use by the printer 101 in Wi-Fi communication and information indicating encryption methods available for use by the printer 101 in Wi-Fi communication. The setting target information and the support information will be described below with reference to Fig. 5. The setting target information will be described below with reference to setting target information 501. The setting target information includes SSID, encryption method, and frequency band, as items. In the setting target information illustrated in Fig. 5, SSID_AAAA is set to a specific value for the SSID item, WI-FI CERTIFIED WPA2 (hereinafter, "WPA2") is set for the encryption method item, 2.4 GHZ is set for the frequency band item, and "12345678" is set for a passphrase item. Specifically, the setting target information indicates that the SSID of the network corresponding to the setting target information illustrated in Fig. 5 is SSID_AAAA, the encryption method that the network uses is WPA2, the frequency band that the network uses is 2.4 GHZ, and the passphrase that the network uses is 12345678. Next, the support information will be described below with reference to support information 502. The support information includes encryption method and frequency band as items. In the support information illustrated in Fig. 5, WPA2 and WPA3 are set to the encryption method, and 2.4 GHZ and 5 GHZ are set to the frequency band. Specifically, the support information illustrated in Fig. 5 indicates that the printer 101 having transmitted the support information supports the WPA2 and WPA3 encryption methods and the 2.4- and 5-GHZ frequency bands. The support information and setting target information has been described with reference to specific detailed information, e.g., 2.4-GHZ and 5-GHZ, however these are merely illustrative examples and other detailed information or information fields will be known to the skilled person, for example 6-GHZ.

Next, in step S407, the setup application 301 performs a first determination process of comparing settings indicated by the setting target information set in step S405 and settings indicated by the support information acquired in step S406 to determine whether to change details of the setting target information. Specifically, the determination is a process of determining whether the encryption methods indicated by the support information include an encryption method with higher security strength than the encryption method indicated by the setting target information. In other words, the determination is a process of determining whether the printer 101 supports an encryption method with higher security strength than the encryption method indicated by the setting target information. In yet other words, the determination is a process of determining whether the printer 101 is able to communicate with any network through an encryption method with higher security strength than the encryption method indicated by the setting target information. In a case where a determination result indicates YES (YES in step S407), the processing proceeds to step S408. In a case where the determination result indicates NO (NO in step S407), the processing proceeds to step S416 without changing the setting target information.

Next, in step S408, the setup application 301 transmits a Simple Network Management Protocol (hereinafter, "SNMP") Get Request to the printer 101 to thereby acquire a list of one or more networks from the printer 101. While SNMP is described as an example of a protocol used in communication with the printer 101 according to the present embodiment, other protocols may be used. The list acquired herein is a list of networks discovered through a search for nearby networks by the printer 101 and is a list of networks to which the printer 101 is connectable. Specifically, in a case where the printer 101 supports the WPA2 and WPA3 encryption methods and the 2.4- and 5-GHZ frequency bands, the list may include a network that supports WPA2, a network that supports WPA3, a network that supports 2.4 GHZ, and a network that supports 5 GHZ. The above-described networks may also be referred to as access points.

Next, in step S409, the setup application 301 performs a second determination process of comparing the setting target information set in step S405 and the list acquired in step S408 to determine whether to change details of the setting target information. Specifically, the determination is a process of determining whether the list includes at least one network that supports an encryption method with higher security strength than the encryption method indicated by the setting target information. In other words, the determination is a process of determining whether at least one network included in the list supports an encryption method with higher security strength than the encryption method indicated by the setting target information. In a case where the determination result indicates YES (YES in step S409), the processing proceeds to step S410. In a case where the determination result indicates NO (NO in step S409), the processing proceeds to step S416 without changing the setting target information.

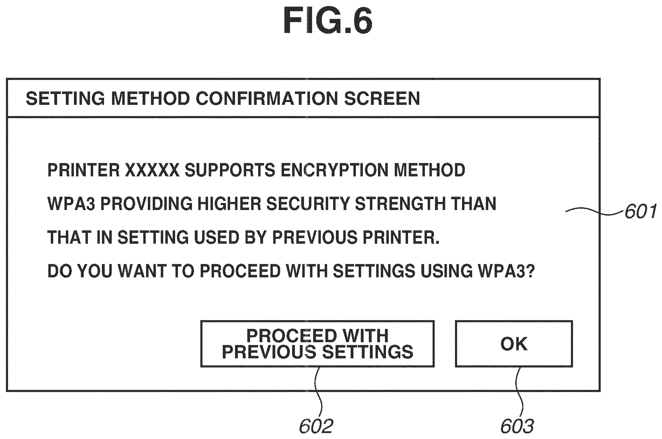

Next, in step S410, the setup application 301 displays a confirmation screen for prompting the user to confirm whether to change details of the setting target information. Fig. 6 illustrates an example of the confirmation screen. The confirmation screen includes a message 601 indicating that an encryption method with higher security strength is also available, a button 602 for selection of not-changing details of the setting target information, and a button 603 for selection of changing details of the setting target information. The confirmation screen may display at least a part (e.g., SSID) of the wireless setting information about at least one network that supports an encryption method with higher security strength than the encryption method indicated by the setting target information.

Next, in step S411, the setup application 301 determines whether an instruction to change the details of the setting target information is issued by pressing the button 603. In a case where the button 603 is pressed and the determination result indicates YES (YES in step S411), the processing proceeds to step S412. In a case where the button 602 is pressed and the determination result indicates NO (NO in step S411), the processing proceeds to step S416 without changing the setting target information.

Next, in step S412, the setup application 301 sets, to the setting target information, wireless setting information about at least one network that supports an encryption method with higher security strength than the encryption method indicated by the setting target information among the networks included in the list. Specifically, the details of the setting target information are changed. The wireless setting information about which network is to be set to the setting target information is identified by, for example, displaying at least one network that supports an encryption method with higher security strength than the encryption method indicated by the setting target information among the networks included in the list and receiving selection from the user.

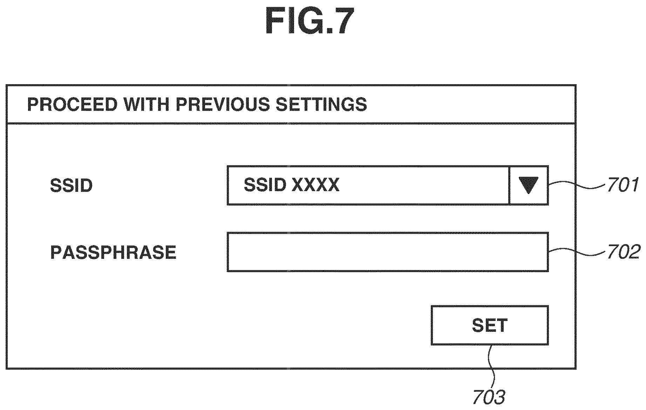

Fig. 7 illustrates an example of a reception screen for receiving input regarding the wireless setting information about which network is to be set in the setting target information. The screen includes an area 701 for selecting a network from at least one network that supports an encryption method with higher security strength than the encryption method indicated by the setting target information among the networks included in the list. The screen further includes an area 702 for inputting a passphrase for connecting to the network selected in the area 701 and includes an area 703 for completing the input. In a case where the list includes only one network that supports an encryption method with higher security strength than the encryption method indicated by the setting target information, the network may be determined without receiving selection from the user. In a case where the area 703 is selected, the details of the setting target information are changed based on the information input to the screen. Thereafter, in step S413, the setup application 301 transmits the changed setting target information to the printer 101.

Next, in step S414, the setup application 301 attempts to communicate with the printer 101 via the network to which the information processing apparatus 102 is being connected. Prior to the attempt to communicate with the printer 101, the setup application 301 may change the network that is the connection destination of the information processing apparatus 102. For example, the information processing apparatus 102 may re-connect to the network to which the information processing apparatus 102 was connected before the establishment of the Wi-Fi connection between the information processing apparatus 102 and the printer 101 in step S405. For example, the information processing apparatus 102 may connect to the network corresponding to the wireless setting information transmitted as setting target information using the wireless setting information.

Next, in step S415, the setup application 301 determines whether the communication with the printer 101 is successful. In a case where the determination result indicates YES (YES in step S415), the process in the flowchart is ended. At this time, a process of receiving capability information from the printer 101 and registering the printer 101 in the setup application 301 may be performed. In a case where the determination result indicates NO (NO in step S415), the setting target information is changed again to the details before the change in step S413, and the processing proceeds to step S416. The flowchart may be ended even in a case where the determination result indicates NO, because there may be a case where, for example, while a connection is successfully established between the printer 101 and the network corresponding to the setting target information, the network is different from the network to which the information processing apparatus 102 is being connected. Thus, the communication with the printer 101 is unsuccessful. In the case where the determination result indicates NO, a screen indicating that the information processing apparatus 102 and the printer 101 cannot communicate with each other may be displayed.

In step S416, the setup application 301 transmits setting target information to the printer 101. The setting target information transmitted here is the wireless setting information acquired in step S401 and having remained unchanged from the wireless setting information acquired in step S401. Thereafter, the process in the flowchart is ended.

Through the foregoing process, a determination is made based on the wireless setting information acquired from the OS or the wireless setting information set previously and the support information about the printer 101 when the information processing apparatus 102 performs the connection setting process on the printer 101, so that a guidance on a setting with a higher security strength is provided to the user in a case where a setting with the higher security is determined to be available. This makes it possible to implement the settings that ensure security suitable for each environment. In addition, in determining setting target information, the wireless setting information is acquired from the OS before wireless setting information set previously is acquired, so that the information currently set for the information processing apparatus 102 is preferentially used to perform a setup, thus making the settings suitable for the current environment. Furthermore, use of the setting method confirmation screen illustrated in Fig. 6 enables the user to confirm details of the settings and then determine whether to proceed with the settings with higher security strength, and only the SSIDs with high security strength are listed and made selectable in Fig. 7 to thereby reduce the burden on the user in making the settings. In a case where the printer 101 does not support the settings with a higher strength or in a case where the wireless setting is not completed normally, the wireless setting information acquired from the OS or the wireless setting information set previously is set to thereby proceed with the settings, thus reducing the burden on the user.

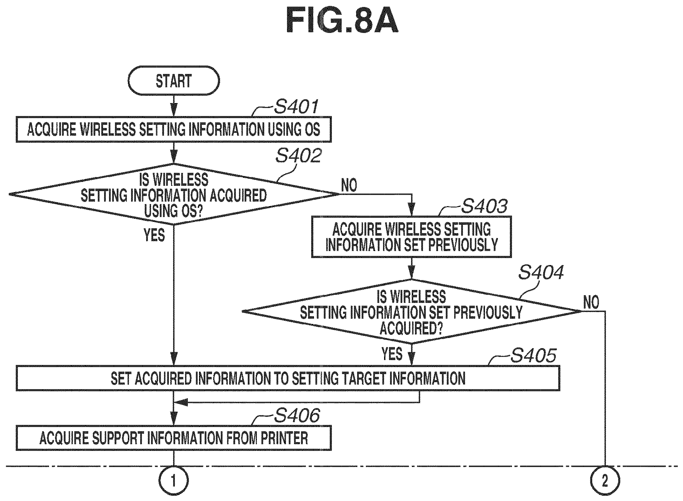

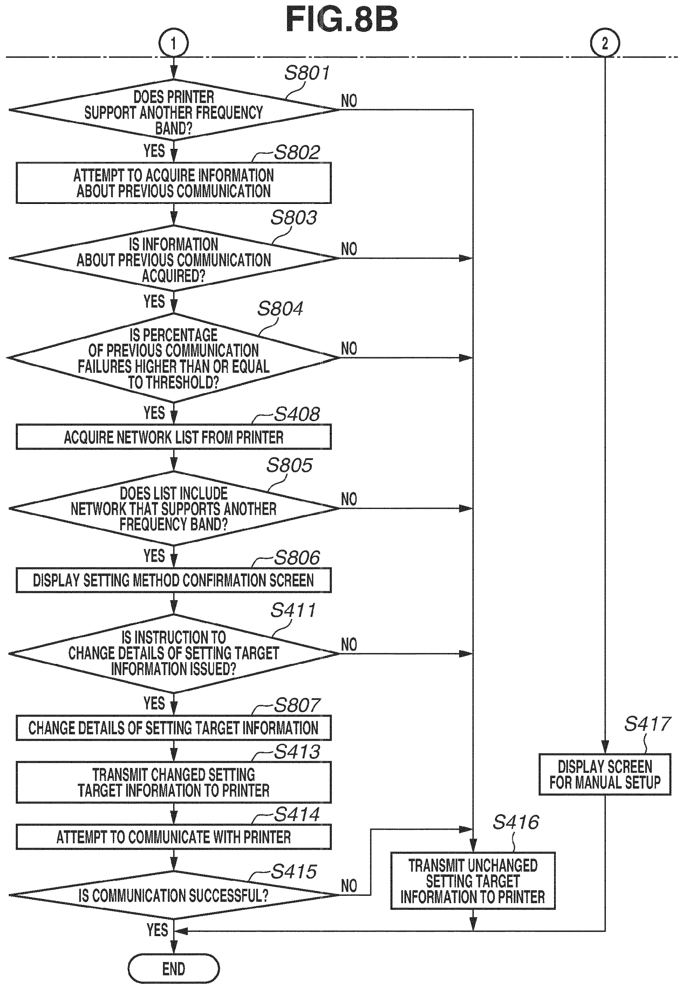

A second embodiment of the present invention will be described in detail below with reference to Figs. 8 (consisting of Figs. 8A and 8B), 9, and 10. An example of a setup that the information processing apparatus 102 performs on the printer 101 based on use logs of the printer 101 in view of frequency bands of use will be described below in the present embodiment. Each frequency band for use in communication has characteristics, so that it is desirable to use a frequency band suitable for each use environment. According to the present embodiment, whether to provide guidance on another frequency band is determined based on communication error history for existing status of use and the provision of guidance is performed.

Fig. 8 (consisting of Figs. 8A and 8B) is a flowchart illustrating a process in which the information processing apparatus 102 connects the printer 101 to the router apparatus 103. This process is realized by the CPU 203 loading a program stored in the ROM 204 or the external storage device 206 into the RAM 205 and executing the program.

Specifically, the process is performed based on the program stored as the setup application program 301 in the external storage device 206. Hereinafter, the process performed by the setup application 301 is actually a process realized by the CPU 203 executing the setup application 301. The process is initiated in a case where the setup application 301 is activated. Redundant descriptions of each process corresponding to a process according to the first embodiment are omitted. Put another way, the second embodiment comprises elements or features of the processes described in reference to the first embodiment but for the sake of conciseness these descriptions are omitted and the same reference numerals are used. The skilled person will recognize that these omitted features are not necessarily essential features to the second embodiment.

In step S801, the setup application 301 performs the first determination process of comparing the settings indicated by the setting target information set in step S405 and the settings indicated by the support information acquired in step S406 to determine whether to change details of the setting target information. Specifically, this determination is a process of determining whether the frequency bands indicated by the support information include a frequency band different from the frequency band indicated by the setting target information. In other words, the determination is a process of determining whether the printer 101 supports a frequency band different from the frequency band indicated by the setting target information. In yet other words, the determination is a process of determining whether the printer 101 is able to communicate with a network using a frequency band different from the frequency band indicated by the setting target information. In a case where a determination result indicates YES (YES in step S801), the processing proceeds to step S802. In a case where the determination result indicates NO (NO in step S801), the processing proceeds to step S416 without changing the setting target information.

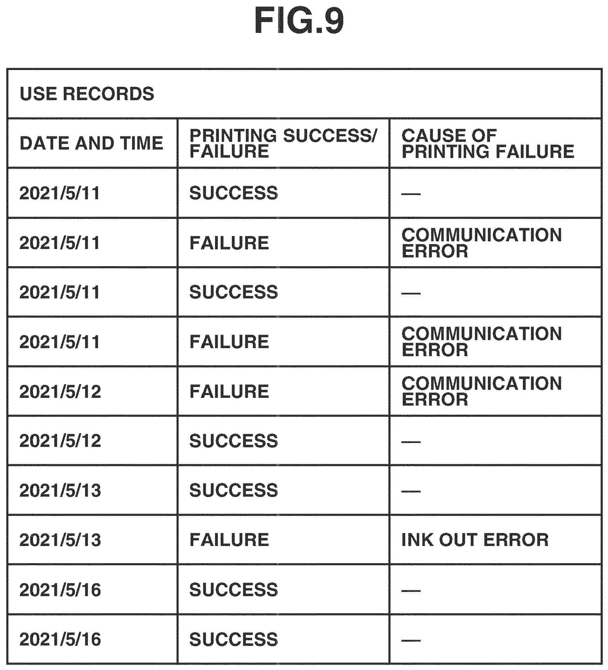

Next, in step S802, the setup application 301 attempts to acquire communication log information about previous communications with other apparatuses via an access point corresponding to the setting target information set in step S405. Specifically, the communication log information is, for example, information about print jobs transmitted to other apparatuses via the access point corresponding to the setting target information set in step S405. In other words, the communication log information is information about previous status of use of the other apparatus. Specifically, the information about print jobs is, for example, table information illustrated in Fig. 9 including information indicating the transmission date and time of each print job, information indicating the success or failure of printing based on the print job, and information indicating a cause of the failure of printing based on the print job. The cause of the failure in printing based on the print job can be an error (communication error) in previous communication with another apparatus via the access point corresponding to the setting target information set in step S405. Other examples of the cause include an error (ink out error) caused by a shortage of ink in the other apparatus and an error (sheet out error) caused by a shortage of a sheet in the other apparatus. The other apparatus may be the printer 101 or another printer different from the printer 101.

Next, in step S803, the setup application 301 determines whether the communication log information is acquired. In a case where the setup application 301 has not communicated with another printer via the access point corresponding to the setting target information set in step S405 (there is no previous use record), no communication log information can be acquired.

Next, in step S804, the setup application 301 performs the second determination process of determining whether to change details of the setting target information based on the acquired communication log information. Specifically, the determination is a process of determining whether a percentage of failures of communications with the printer 101 via the access point corresponding to the setting target information set in step S405 is higher than or equal to a predetermined threshold. The predetermined threshold is, for example, 20%. Thus, the determination is, for example, a process of determining whether the percentage of printing failures caused by a communication error is higher than 20% of all printings. The all printings indicate one or more printings based on one or more print jobs transmitted previously from the setup application 301 via the communication with the printer 101 via the access point corresponding to the setting target information set in step S405. In a case where the determination result indicates YES (YES in step S804), the processing proceeds to step S408. In a case where the determination result indicates NO (NO in step S804), the processing proceeds to step S416 without changing the setting target information. The determination makes it possible to determine whether there is a high likelihood of a communication error occurring during communication using the frequency band indicated by the setting target information so that whether to change the setting target information is determinable.

In step S805 following step S408, the setup application 301 performs a fourth determination process of comparing the setting target information set in step S405 with the list acquired in step S408 to determine whether to change details of the setting target information. Specifically, the determination is a process of determining whether the list includes at least one network that supports a frequency band different from the frequency band indicated by the setting target information. For example, in a case where the frequency band indicated by the setting target information is 2.4 GHZ, whether the list includes at least one network that supports 5 GHZ is determined in the process. In a case where the determination result indicates YES (YES in step S805), the processing proceeds to step S806. In a case where the determination result indicates NO (NO in step S805), the processing proceeds to step S416 without changing the setting target information.

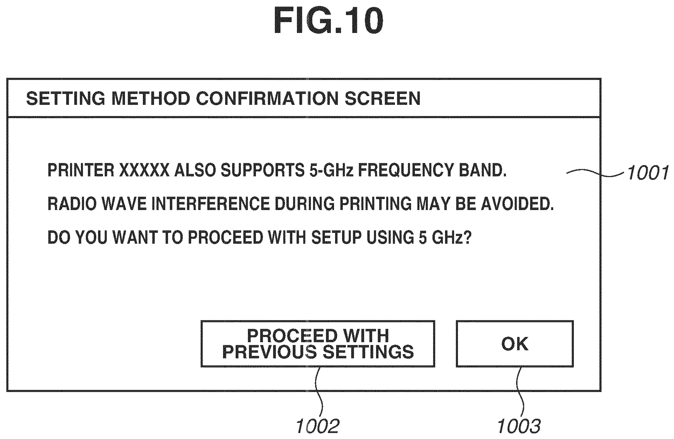

Next, in step S806, the setup application 301 displays a confirmation screen for prompting the user to confirm whether to change the details of the setting target information. Fig. 10 illustrates an example of the confirmation screen. The confirmation screen includes a message 1001 indicating that a frequency band different from the frequency band indicated by the setting target information is also available, a button 1002 for not changing the content of the setting target information, and a button 1003 for changing the content of the setting target information. The confirmation screen may display at least a part (e.g., SSID) of the wireless setting information for at least one network that supports a frequency band different from the frequency band indicated by the setting target information.

In step S807 following step S411, the setup application 301 sets, to the setting target information, wireless setting information about at least one network that supports a frequency band different from the frequency band indicated by the setting target information among the networks included in the list. Specifically, details of the setting target information are changed. The wireless setting information about which network is to be set in the setting target information is identified by, for example, displaying at least one network that supports a frequency band different from the frequency band indicated by the setting target information among the networks included in the list and receiving selection from the user. A screen similar to the screen illustrated in Fig. 7 may be displayed herein. The screen includes an area for selecting a network from at least one network that supports a frequency band different from the frequency band indicated by the setting target information among the networks included in the list. In a case where the list includes only one network that supports a frequency band different from the frequency band indicated by the setting target information, the network may be identified without receiving selection from the user. In a case where an area for completing the input is selected, the details of the setting target information are changed based on the information input to the screen.

The foregoing process makes it possible to determine whether to provide guidance on a setting that uses another frequency band based on the wireless setting information acquired from the OS or the wireless setting information set previously and the support information and the communication log information about the printer 101 during the connection setting process performed on the printer 101 by the information processing apparatus 102 and to provide the guidance to the user.

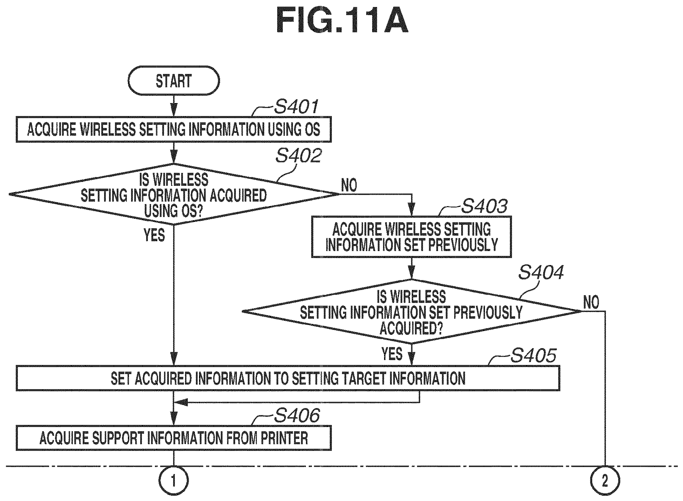

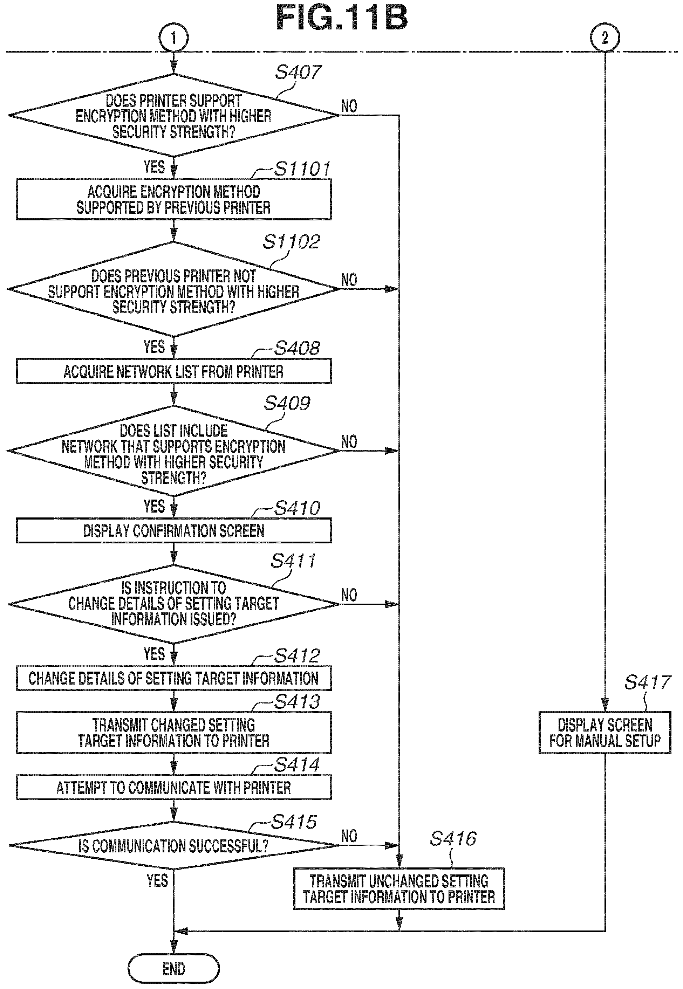

A third embodiment of the present invention will be described in detail below with reference to Fig. 11 (consisting of Figs. 11A and 11B). A form according to the present embodiment in which even with the presence of a network that supports an encryption method with higher security strength than the encryption method indicated by the setting target information, the setting target information is not changed in a case where there is a high likelihood that the user is intentionally using the encryption method indicated by the setting target information will be described below.

Fig. 11 is a flowchart illustrating a process in which the information processing apparatus 102 connects the printer 101 to the router apparatus 103. This process is realized by the CPU 203 loading a program stored in the ROM 204 or the external storage device 206 into the RAM 205 and executing the program. Specifically, the process is performed by the program stored as the setup application program 301 in the external storage device 206. Hereinafter, the process performed by the setup application 301 is, in practice, a process realized by the CPU 203 executing the setup application 301. The process is initiated in a case where the setup application 301 is activated. Redundant descriptions of each process corresponding to a process according to the first embodiment are omitted. Put another way, the third embodiment comprises elements or features of the processes described in reference to the first embodiment but for the sake of conciseness these descriptions are omitted. The skilled person will recognize that these omitted features are not necessarily essential features to the second embodiment.

In step S1101 after step S407, support information is acquired from another printer that is different from the printer 101 serving as the setting target information transmission destination in the process and is registered in the setup application 301. The other printer also has been communicated through the setup application 301. The other printer may be a printer with which communication has been performed previously via the access point corresponding to the setting target information set in step S405.

Next, in step S1102, the setup application 301 performs a fifth determination process of comparing the setting target information set in step S405 and the support information acquired in step S406 to determine whether to change details of the setting target information. Specifically, this determination is a process of determining whether the encryption methods indicated by the support information include an encryption method with higher security strength than the encryption method indicated by the setting target information. In other words, the determination is a process of determining whether the other printer does not support an encryption method with higher security strength than the encryption method indicated by the setting target information. In a case where the encryption method indicated by the setting target information is an encryption method with low security strength although the other printer supports an encryption method with higher security strength than the encryption method indicated by the setting target information, there is a high likelihood that the user is intentionally using the encryption method with low security strength. Thus, in a case where the other printer supports an encryption method with higher security strength than the encryption method indicated by the setting target information, it is determined not to change the content of the setting target information. In a case where the other printer does not support an encryption method with higher security strength than the encryption method indicated by the setting target information, it is determined to change the details of the setting target information. In a case where the determination result indicates YES (YES in step S1102), the processing proceeds to step S408. In a case where the determination result indicates NO (NO in step S1102), the processing proceeds to step S416 without changing the setting target information.

The foregoing process makes it possible to switch the guidance based on details of support of the printer used previously even in a case where the printer 101 (i.e., the printer being setup) supports higher security strength than the wireless information for use in configuring the settings. This prevents unnecessary display of the setting confirmation screen for selecting whether to make the settings with high security strength, thus reducing the load on the user.

While the operations in steps S403 and S404 are performed after the determination in step S402 is performed in the above-described form, this is not a limiting form. For example, the operations in steps S403 and S404 may be performed first, and in a case where the determination result in step S404 indicates NO, the processing proceeds to step S402, whereas in a case where the determination result in step S404 indicates YES, the processing proceeds to step S405. In a case where the determination result step S402 indicates NO, the processing proceeds to step S417, whereas in a case where the determination result step S402 indicates YES, the processing proceeds to step S405.

A form in which the operations in steps S403 and S404 are not performed may be employed. In such a form, in a case where the determination result in step S402 indicates NO, the processing proceeds to step S417, whereas in a case where the determination result in step S402 indicates YES, the processing proceeds to step S405. A form in which the determination in step S402 is not performed may be employed. In such a case, the operations in steps S403 and S404 are performed after step S401.

The first and second embodiments may be combined together or may be performed in combination with each other. Specifically, for example, the operations in steps S801 to S807 may be performed in a case where the determination result step S407 indicates NO.

It is obvious that the purpose of the present invention is achieved also by supplying a recording medium storing program codes of software for realizing the functions of the above-described embodiments to a system or an apparatus and causing a computer (or a CPU or a micro-processing unit (MPU)) of the system or the apparatus to read the program codes stored in the recording medium and execute the read program codes. In this case, the program codes read from the storage medium realize the functions of the above-described embodiments, and the storage medium storing the program codes constitutes the present invention.

For example, a flexible disk, a hard disk, an optical disk, a magneto-optical disk, a compact disk (CD) ROM (CD-ROM), a CD-recordable (CD-R), a magnetic tape, a nonvolatile memory card, a ROM, or a digital versatile disk (DVD) may be used as the storage medium for supplying the program codes.

It is obvious that not only cases where the functions of the above-described embodiments are realized by the computer by executing the program codes read by the computer but also cases where an OS running on the computer performs part or all of the actual processes based on instructions of the program codes and the functions of the above-described embodiments are realized by the processes are also encompassed.

Furthermore, it is obvious that cases where after the program codes read from the storage medium are written to a memory of a function expansion board inserted in the computer or a function expansion unit connected to the computer, a CPU of the function expansion board or the function expansion unit performs part or all of the actual processes based on the instructions of the program codes and the functions of the above-described embodiments are realized by the processes are also encompassed.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to the above embodiments, it is to be understood that the invention is not limited to the disclosed embodiments. The scope of the invention is provided by the following claims.

## Claims

1. A computer program product (301) comprising instructions which, when executed by a computer, are configured to cause an information processing apparatus (102) to:
acquire first information (S403) about a first network, the first information being information transmitted previously to another apparatus different from a communication apparatus (101) and different from the information processing apparatus (102) by the information processing apparatus (102); and
execute a predetermined process (S412) configured to transmit second information about a second network to the communication apparatus (101) based on the communication apparatus being able to communicate with a network using a second setting different from a first setting in a case that the second setting is a setting indicating an encryption method with higher security strength than an encryption method indicated by the first setting, the first setting being a setting that is indicated by the acquired first information and is for use in communication with the first network, and the second network, that is an access point different from the information processing apparatus, being a network that is different from the first network and with which the information processing apparatus is able to communicate using the second setting, wherein, in a case that the second information is transmitted to the communication apparatus (101), the communication apparatus (101) connects with the second network by using the second information.

2. The computer program product (301) according to claim 1,
wherein the predetermined process includes a process of acquiring a list of one or more networks (S408) and a process of identifying (S409), from the list, a network corresponding to the second setting,
wherein the second information is information about the second network included in the list, and
wherein the second network is a network identified as the network corresponding to the second setting.

3. The computer program product (301) according to claim 2,
wherein the list is a list of one or more networks discovered by the communication apparatus (101), and
wherein the list is acquired from the communication apparatus.

4. The computer program product (301) according to any one of claims 1 to 3,
wherein the predetermined process includes a process of displaying (S410) a predetermined confirmation screen (601), and
wherein the first information is transmitted to the communication apparatus (101) based on a first input (602) having been performed on the predetermined confirmation screen, and the second information is transmitted to the communication apparatus based on a second input (603) having been performed on the predetermined confirmation screen.

5. The computer program product (301) according to any one of claims 1 to 4, further causing the information processing apparatus (102) to acquire (S406), from the communication apparatus (101), support information (502) indicating communication capabilities supported by the communication apparatus,
wherein the predetermined process is performed based on the communication apparatus having been identified, based on the support information (502), as being able to communicate with a network using the second setting.

6. The computer program product (301) according to any one of claims 1 to 5, further causing the information processing apparatus (102) to:
attempt to communicate (S414) with the communication apparatus (101) via a network to which the information processing apparatus is being connected after the second information is transmitted to the communication apparatus; and
transmit(S416) the first information to the communication apparatus based on a failure of the communicate with the communication apparatus via a network to which the information processing apparatus is being connected, after the second information is transmitted to the communication apparatus.

7. The computer program product (301) according to any one of claims 1 to 6, further causing the information processing apparatus (102) to:
attempt to acquire third information (S401) about the network to which the information processing apparatus is being connected,
wherein the predetermined process (S412) is executed in a case that the third information is acquired and the second setting is a setting indicating an encryption method with higher security strength than an encryption method indicated by a third setting and in a case that the third information is not acquired and the second setting is the setting indicating the encryption method with higher security strength than the encryption method indicated by the first setting, and
wherein the third setting being a setting that is indicated by the acquired third information and is for use in communication with the network to which the information processing apparatus is being connected.

8. The computer program product (302) according to claim 7, wherein attempting to acquire the third information is executed by an application program interface of an operating system (OS).

9. The computer program product (302) according to any one of claims 1 to 8,
wherein, in a case that the second setting is not the setting indicating the encryption method with higher security strength than the encryption method indicated by the first setting, the predetermined process is not executed and a process configured to transmit the first information to the communication apparatus (101) is executed (S416).

10. The computer program product (302) according to any one of claims 1 to 8,
wherein the first setting and the second setting are each a setting related to a frequency band,
wherein, among a first frequency band and a second frequency band, the second setting is a setting indicating a frequency band different from a frequency band indicated by the first setting, and
wherein the first frequency band and the second frequency band are 2.4- and 5-GHz frequency bands.

11. The computer program product (302) according to claim 10, further causing the information processing apparatus (102) to acquire information about previous communication using the frequency band indicated by the first setting,
wherein whether to transmit the first information to the communication apparatus or to transmit the second information to the communication apparatus is controlled based on the information about the previous communication.

12. The computer program product (302) according to claim 11, wherein, in a case where a percentage of the previous communication having resulted in failure is not higher than a predetermined threshold, the control is performed to transmit the first information to the communication apparatus (101) irrespective of the communication apparatus being able to communicate with a network using the second setting, whereas in a case where the percentage of the previous communication having resulted in failure is higher than the predetermined threshold and the communication apparatus supports communication with a network using the second setting, the control is performed to transmit the second information to the communication apparatus.

13. The computer program product (302) according to claim any one of claims 1 to 12, wherein the communication apparatus (101) is a printing apparatus.

14. A control method for an information processing apparatus, the method comprising:
acquiring first information about a first network, the first information being information transmitted previously to another apparatus different from a communication apparatus (101) and different from the information processing apparatus (102) by the information processing apparatus (102); and
executing a predetermined process configured to transmit second information about a second network to the communication apparatus based on the communication apparatus being able to communicate with a network using a second setting different from a first setting in a case that the second setting is a setting indicating an encryption method with higher security strength than an encryption method indicated by the first setting, the first setting being a setting that is indicated by the acquired first information and is for use in communication with the first network, and the second network, that is an access point different from the information processing apparatus, being a network that is different from the first network and with which the information processing apparatus is able to communicate using the second setting, wherein, in a case that the second information is transmitted to the communication apparatus (101), the communication apparatus (101) connects with the second network by using the second information.

15. An information processing apparatus (102) comprising:
an acquisition means configured to acquire first information about a first network, the first information being information transmitted previously to another apparatus different from a communication apparatus (101) and different from the information processing apparatus (102) by the information processing apparatus (102); and
an execution means configured to execute a predetermined process of transmitting second information about a second network to the communication apparatus based on the communication apparatus being able to communicate with a network using a second setting different from a first setting in a case that the second setting is a setting indicating an encryption method with higher security strength than an encryption method indicated by the first setting, the first setting being a setting that is indicated by the acquired first information and is for use in communication with the first network, and the second network, that is an access point different from the information processing apparatus, being a network that is different from the first network and with which the information processing apparatus is able to communicate using the second setting, wherein, in a case that the second information is transmitted to the communication apparatus (101), the communication apparatus (101) connects with the second network by using the second information.

## Patentansprüche

1. Computerprogrammprodukt (301), das Anweisungen umfasst, die, wenn sie von einem Computer ausgeführt werden, konfiguriert sind, eine Informationsverarbeitungsvorrichtung (102) zu veranlassen zum:
Erfassen erster Information (S403) über ein erstes Netzwerk, wobei die erste Information Information ist, die zuvor durch die Informationsverarbeitungsvorrichtung (102) an eine andere Vorrichtung übertragen wurde, die sich von einer Kommunikationsvorrichtung (101) unterscheidet und sich von der Informationsverarbeitungsvorrichtung (102) unterscheidet; und
Ausführen eines vorbestimmten Prozesses (S412), der konfiguriert ist, zweite Information über ein zweites Netzwerk an die Kommunikationsvorrichtung (101) zu übertragen, basierend darauf, dass die Kommunikationsvorrichtung in der Lage ist, mit einem Netzwerk unter Verwendung einer zweiten Einstellung zu kommunizieren, die sich von einer ersten Einstellung unterscheidet, falls die zweite Einstellung eine Einstellung ist, die ein Verschlüsselungsverfahren mit höherer Sicherheitsstärke als ein durch die erste Einstellung angegebenes Verschlüsselungsverfahren angibt, wobei die erste Einstellung eine Einstellung ist, welche durch die erfasste erste Information angegeben wird und zur Verwendung bei der Kommunikation mit dem ersten Netzwerk dient, und das zweite Netzwerk, das ein Access Point ist, welcher sich von der Informationsverarbeitungsvorrichtung unterscheidet, ein Netzwerk ist, welches sich vom ersten Netzwerk unterscheidet und mit dem die Informationsverarbeitungsvorrichtung in der Lage ist, unter Verwendung der zweiten Einstellung zu kommunizieren, wobei, falls die zweite Information an die Kommunikationsvorrichtung (101) übertragen wird, die Kommunikationsvorrichtung (101) sich unter Verwendung der zweiten Information mit dem zweiten Netzwerk verbindet.

2. Computerprogrammprodukt (301) nach Anspruch 1,
wobei der vorbestimmte Prozess einen Prozess des Erfassens einer Liste von einem oder mehreren Netzwerken (S408) und einen Prozess des Identifizierens (S409), aus der Liste, eines Netzwerks enthält, welches der zweiten Einstellung entspricht,
wobei die zweite Information Information über das zweite Netzwerk ist, welches in der Liste enthalten ist, und
wobei das zweite Netzwerk ein Netzwerk ist, welches als das der zweiten Einstellung entsprechende Netzwerk identifiziert wird.

3. Computerprogrammprodukt (301) nach Anspruch 2,
wobei die Liste eine Liste von einem oder mehr Netzwerken ist, welche durch die Kommunikationsvorrichtung (101) entdeckt werden, und
wobei die Liste von der Kommunikationsvorrichtung erfasst wird.

4. Computerprogrammprodukt (301) nach einem der Ansprüche 1 bis 3,
wobei der vorbestimmte Prozess einen Prozess des Anzeigens (S410) eines vorbestimmten Bestätigungsbildschirms (601) enthält, und
wobei die erste Information basierend auf einer ersten Eingabe (602), welche auf dem vorbestimmten Bestätigungsbildschirm durchgeführt wurde, an die Kommunikationsvorrichtung (101) übertragen wird, und die zweite Information basierend auf einer zweiten Eingabe (603), welche auf dem vorbestimmten Bestätigungsbildschirm durchgeführt wurde, an die Kommunikationsvorrichtung übertragen wird.

5. Computerprogrammprodukt (301) nach einem der Ansprüche 1 bis 4, welches die Informationsverarbeitungsvorrichtung (102) ferner veranlasst, von der Kommunikationsvorrichtung (101) Unterstützungsinformation (502) zu erfassen (S406), die Kommunikationsfähigkeiten angibt, welche von der Kommunikationsvorrichtung unterstützt werden,
wobei der vorbestimmte Prozess basierend darauf durchgeführt wird, dass die Kommunikationsvorrichtung basierend auf der Unterstützungsinformation (502) als in der Lage identifiziert wurde, mit einem Netzwerk unter Verwendung der zweiten Einstellung zu kommunizieren.

6. Computerprogrammprodukt (301) nach einem der Ansprüche 1 bis 5, welches die Informationsverarbeitungsvorrichtung (102) ferner veranlasst zum:
Versuchen, mit der Kommunikationsvorrichtung (101) über ein Netzwerk zu kommunizieren (S414), mit welchem die Informationsverarbeitungsvorrichtung verbunden wird, nachdem die zweite Information an die Kommunikationsvorrichtung übertragen wird; und
Übertragen (S416) der ersten Information an die Kommunikationsvorrichtung basierend auf einem Fehlschlagen der Kommunikation mit der Kommunikationsvorrichtung über ein Netzwerk, mit welchem die Informationsverarbeitungsvorrichtung verbunden wird, nachdem die zweite Information an die Kommunikationsvorrichtung übertragen wird.

7. Computerprogrammprodukt (301) nach einem der Ansprüche 1 bis 6, welches die Informationsverarbeitungsvorrichtung (102) ferner veranlasst zum:
Versuchen, dritte Information (S401) über das Netzwerk zu erfassen, mit welchem die Informationsverarbeitungsvorrichtung verbunden wird,
wobei der vorbestimmte Prozess (S412) ausgeführt wird, falls die dritte Information erfasst wird und die zweite Einstellung eine Einstellung ist, die ein Verschlüsselungsverfahren mit höherer Sicherheitsstärke als ein Verschlüsselungsverfahren angibt, welches durch eine dritte Einstellung angegeben wird, und falls die dritte Information nicht erfasst wird und die zweite Einstellung die Einstellung ist, welche das Verschlüsselungsverfahren mit höherer Sicherheitsstärke als das Verschlüsselungsverfahren angibt, welches durch die erste Einstellung angegeben wird, und
wobei die dritte Einstellung eine Einstellung ist, welche durch die erfasste dritte Information angegeben wird und zur Verwendung in der Kommunikation mit dem Netzwerk dient, mit welchem die Informationsverarbeitungsvorrichtung verbunden wird.

8. Computerprogrammprodukt (302) nach Anspruch 7, wobei das Versuchen, die dritte Information zu erfassen, von einer Anwendungsprogrammschnittstelle eines Betriebssystems (OS) ausgeführt wird.

9. Computerprogrammprodukt (302) nach einem der Ansprüche 1 bis 8,
wobei, falls die zweite Einstellung nicht die Einstellung ist, welche das Verschlüsselungsverfahren mit höherer Sicherheitsstärke als das durch die erste Einstellung angegebene Verschlüsselungsverfahren angibt, der vorbestimmte Prozess nicht ausgeführt wird und ein Prozess, der konfiguriert ist, die erste Information an die Kommunikationsvorrichtung (101) zu übertragen, ausgeführt wird (S416).

10. Computerprogrammprodukt (302) nach einem der Ansprüche 1 bis 8,
wobei die erste Einstellung und die zweite Einstellung jeweils eine Einstellung sind, die sich auf ein Frequenzband bezieht,
wobei, unter einem ersten Frequenzband und einem zweiten Frequenzband, die zweite Einstellung eine Einstellung ist, die ein Frequenzband angibt, welches sich von einem Frequenzband unterscheidet, welches durch die erste Einstellung angegeben wird, und
wobei das erste Frequenzband und das zweite Frequenzband 2,4- und 5-GHz-Frequenzbänder sind.

11. Computerprogrammprodukt (302) nach Anspruch 10, welches die Informationsverarbeitungsvorrichtung (102) ferner veranlasst, Information über eine vorherige Kommunikation unter Verwendung des Frequenzbandes zu erfassen, welches durch die erste Einstellung angegeben wird,
wobei, ob die erste Information an die Kommunikationsvorrichtung zu übertragen ist oder die zweite Information an die Kommunikationsvorrichtung zu übertragen ist, basierend auf der Information über die vorherige Kommunikation gesteuert wird.

12. Computerprogrammprodukt (302) nach Anspruch 11, wobei, falls ein Prozentsatz der vorherigen Kommunikation, welche zu einem Fehlschlagen führte, nicht höher als ein vorbestimmter Schwellenwert ist, die Steuerung durchgeführt wird, um die erste Information an die Kommunikationsvorrichtung (101) zu übertragen, unabhängig davon, ob die Kommunikationsvorrichtung in der Lage ist, mit einem Netzwerk unter Verwendung der zweiten Einstellung zu kommunizieren, wohingegen, falls der Prozentsatz der vorherigen Kommunikation, welche zu einem Fehlschlagen führte, höher als der vorbestimmte Schwellenwert ist und die Kommunikationsvorrichtung Kommunikation mit einem Netzwerk unter Verwendung der zweiten Einstellung unterstützt, die Steuerung durchgeführt wird, um die zweite Information an die Kommunikationsvorrichtung zu übertragen.

13. Computerprogrammprodukt (302) nach einem der Ansprüche 1 bis 12, wobei die Kommunikationsvorrichtung (101) eine Druckvorrichtung ist.

14. Steuerverfahren für eine Informationsverarbeitungsvorrichtung, wobei das Verfahren umfasst:
Erfassen erster Information über ein erstes Netzwerk, wobei die erste Information Information ist, die zuvor durch die Informationsverarbeitungsvorrichtung (102) an eine andere Vorrichtung übertragen wurde, die sich von einer Kommunikationsvorrichtung (101) unterscheidet und sich von der Informationsverarbeitungsvorrichtung (102) unterscheidet; und
Ausführen eines vorbestimmten Prozesses, der konfiguriert ist, zweite Information über ein zweites Netzwerk an die Kommunikationsvorrichtung zu übertragen, basierend darauf, dass die Kommunikationsvorrichtung in der Lage ist, mit einem Netzwerk unter Verwendung einer zweiten Einstellung zu kommunizieren, die sich von einer ersten Einstellung unterscheidet, falls die zweite Einstellung eine Einstellung ist, die ein Verschlüsselungsverfahren mit höherer Sicherheitsstärke als ein durch die erste Einstellung angegebenes Verschlüsselungsverfahren angibt, wobei die erste Einstellung eine Einstellung ist, welche durch die erfasste erste Information angegeben wird und zur Verwendung bei der Kommunikation mit dem ersten Netzwerk dient, und das zweite Netzwerk, das ein Access Point ist, welcher sich von der Informationsverarbeitungsvorrichtung unterscheidet, ein Netzwerk ist, das sich vom ersten Netzwerk unterscheidet und mit dem die Informationsverarbeitungsvorrichtung in der Lage ist, unter Verwendung der zweiten Einstellung zu kommunizieren, wobei, falls die zweite Information an die Kommunikationsvorrichtung (101) übertragen wird, die Kommunikationsvorrichtung (101) sich unter Verwendung der zweiten Information mit dem zweiten Netzwerk verbindet.

15. Informationsverarbeitungsvorrichtung (102), umfassend:
eine Erfassungseinrichtung, die konfiguriert ist, erste Information über ein erstes Netzwerk zu erfassen, wobei die erste Information Information ist, die zuvor durch die Informationsverarbeitungsvorrichtung (102) an eine andere Vorrichtung übertragen wurde, die sich von einer Kommunikationsvorrichtung (101) unterscheidet und sich von der Informationsverarbeitungsvorrichtung (102) unterscheidet; und
eine Ausführungseinrichtung, die konfiguriert ist, einen vorbestimmten Prozess des Übertragens zweiter Information über ein zweites Netzwerk an die Kommunikationsvorrichtung auszuführen, basierend darauf, dass die Kommunikationsvorrichtung in der Lage ist, mit einem Netzwerk unter Verwendung einer zweiten Einstellung zu kommunizieren, die sich von einer ersten Einstellung unterscheidet, falls die zweite Einstellung eine Einstellung ist, die ein Verschlüsselungsverfahren mit höherer Sicherheitsstärke als ein durch die erste Einstellung angegebenes Verschlüsselungsverfahren angibt, wobei die erste Einstellung eine Einstellung ist, welche durch die erfasste erste Information angegeben wird und zur Verwendung bei der Kommunikation mit dem ersten Netzwerk dient, und das zweite Netzwerk, das ein Access Point ist, welcher sich von der Informationsverarbeitungsvorrichtung unterscheidet, ein Netzwerk ist, das sich vom ersten Netzwerk unterscheidet und mit welchem die Informationsverarbeitungsvorrichtung in der Lage ist, unter Verwendung der zweiten Einstellung zu kommunizieren,
wobei, falls die zweite Information an die Kommunikationsvorrichtung (101) übertragen wird, die Kommunikationsvorrichtung (101) sich unter Verwendung der zweiten Information mit dem zweiten Netzwerk verbindet.
Ah/Ar

## Revendications

1. Produit de programme informatique (301) comprenant des instructions qui, lorsqu'elles sont exécutées par un ordinateur, sont configurées pour amener un appareil de traitement d'informations (102) à :
acquérir des premières informations (S403) concernant un premier réseau, les premières informations étant des informations transmises antérieurement à un autre appareil différent d'un appareil de communication (101) et différent de l'appareil de traitement d'informations (102), par l'appareil de traitement d'informations (102) ; et
exécuter un processus prédéterminé (S412) configuré pour transmettre des deuxièmes informations concernant un second réseau à l'appareil de communication (101) sur la base de la capacité de l'appareil de communication à communiquer avec un réseau à l'aide d'un deuxième paramètre différent d'un premier paramètre dans le cas où le deuxième paramètre est un paramètre indiquant une méthode de chiffrement présentant une force de sécurité supérieure à celle d'une méthode de chiffrement indiquée par le premier paramètre, le premier paramètre étant un paramètre qui est indiqué par les premières informations acquises et destiné à être utilisé en communication avec le premier réseau, et le second réseau, qui est un point d'accès différent de l'appareil de traitement d'informations, étant un réseau différent du premier réseau et avec lequel l'appareil de traitement d'informations peut communiquer à l'aide du deuxième paramètre, dans lequel, dans le cas où les deuxièmes informations sont transmises à l'appareil de communication (101), l'appareil de communication (101) se connecte au second réseau à l'aide des deuxièmes informations.

2. Produit de programme informatique (301) selon la revendication 1,
dans lequel le processus prédéterminé inclut un processus d'acquisition d'une liste d'un ou de plusieurs réseaux (S408) et un processus d'identification (S409), à partir de la liste, d'un réseau correspondant au deuxième paramètre,
dans lequel les deuxièmes informations sont des informations concernant le deuxième réseau inclus dans la liste, et
dans lequel le deuxième réseau est un réseau identifié comme étant le réseau correspondant au deuxième paramètre.

3. Produit de programme informatique (301) selon la revendication 2,
dans lequel la liste est une liste d'un ou plusieurs réseaux découverts par l'appareil de communication (101), et
dans lequel la liste est acquise à partir de l'appareil de communication.

4. Produit de programme informatique (301) selon l'une quelconque des revendications 1 à 3,
dans lequel le processus prédéterminé inclut un processus d'affichage (S410) d'un écran de confirmation prédéterminé (601), et
dans lequel les premières informations sont transmises à l'appareil de communication (101) sur la base d'une première entrée (602) ayant été réalisée sur l'écran de confirmation prédéterminé, et les deuxièmes informations sont transmises à l'appareil de communication sur la base d'une deuxième entrée (603) ayant été réalisée sur l'écran de confirmation prédéterminé.

5. Produit de programme informatique (301) selon l'une quelconque des revendications 1 à 4, amenant en outre l'appareil de traitement d'informations (102) à acquérir (S406), à partir de l'appareil de communication (101), des informations de prise en charge (502) indiquant des capacités de communication prises en charge par l'appareil de communication,
dans lequel le processus prédéterminé est réalisé sur la base de l'appareil de communication ayant été identifié, sur la base des informations de prise en charge (502), comme étant capable de communiquer avec un réseau à l'aide du deuxième paramètre.

6. Produit de programme informatique (301) selon l'une quelconque des revendications 1 à 5, amenant en outre l'appareil de traitement d'informations (102) à :
tenter de communiquer (S414) avec l'appareil de communication (101) via un réseau auquel l'appareil de traitement des informations est connecté après la transmission des deuxièmes informations à l'appareil de communication ; et
transmettre (S416) les premières informations à l'appareil de communication sur la base d'un échec de la communication avec l'appareil de communication via un réseau auquel l'appareil de traitement d'informations est connecté, après que les deuxièmes informations sont transmises à l'appareil de communication.

7. Produit de programme informatique (301) selon l'une quelconque des revendications 1 à 6, amenant en outre l'appareil de traitement d'informations (102) à :
tenter d'acquérir des troisièmes informations (S401) concernant le réseau auquel l'appareil de traitement d'informations est connecté,
dans lequel le processus prédéterminé (S412) est exécuté dans le cas où les troisièmes informations sont acquises et où le deuxième paramètre est un paramètre indiquant une méthode de chiffrement présentant une force de sécurité supérieure à celle d'une méthode de chiffrement indiquée par un troisième paramètre, et dans le cas où les troisièmes informations ne sont pas acquises et où le deuxième paramètre est le paramètre indiquant la méthode de chiffrement présentant une force de sécurité supérieure à celle de la méthode de chiffrement indiquée par le premier paramètre, et
dans lequel le troisième paramètre est un paramètre qui est indiqué par les troisièmes informations acquises et est destiné à être utilisé en communication avec le réseau auquel l'appareil de traitement d'informations est connecté.

8. Produit de programme informatique (302) selon la revendication 7, dans lequel la tentative d'acquisition des troisièmes informations est exécutée par une interface de programme d'application d'un système d'exploitation (OS).

9. Produit de programme informatique (302) selon l'une quelconque des revendications 1 à 8,
dans lequel, dans le cas où le deuxième paramètre n'est pas le paramètre indiquant la méthode de chiffrement présentant une force de sécurité supérieure à celle de la méthode de chiffrement indiquée par le premier paramètre, le processus prédéterminé n'est pas exécuté et un processus configuré pour transmettre les premières informations à l'appareil de communication (101) est exécuté (S416).

10. Produit de programme informatique (302) selon l'une quelconque des revendications 1 à 8,
dans lequel le premier paramètre et le deuxième paramètre sont chacun un paramètre lié à une bande de fréquence,
dans lequel, entre une première bande de fréquence et une deuxième bande de fréquence, le deuxième paramètre est un paramètre indiquant une bande de fréquence différente d'une bande de fréquence indiquée par le premier paramètre, et
dans lequel la première bande de fréquence et la deuxième bande de fréquence correspondent aux bandes de fréquence de 2,4 GHz et 5 GHz.

11. Produit de programme informatique (302) selon la revendication 10, amenant en outre l'appareil de traitement d'informations (102) à acquérir des informations concernant une communication précédente à l'aide de la bande de fréquences indiquée par le premier paramètre,
dans lequel la transmission des premières informations à l'appareil de communication ou la transmission des deuxièmes informations à l'appareil de communication est commandée sur la base des informations concernant la communication précédente.

12. Produit de programme informatique (302) selon la revendication 11, dans lequel, dans le cas où un pourcentage de la communication précédente ayant échoué n'est pas supérieur à un seuil prédéterminé, la commande est réalisée pour transmettre les premières informations à l'appareil de communication (101), indépendamment de la capacité de l'appareil de communication à communiquer avec un réseau à l'aide du deuxième paramètre tandis que, dans le cas où le pourcentage de la communication précédente ayant échoué est supérieur au seuil prédéterminé et que l'appareil de communication prend en charge la communication avec un réseau à l'aide du deuxième paramètre, la commande est réalisée pour transmettre les deuxièmes informations à l'appareil de communication.

13. Produit de programme informatique (302) selon l'une quelconque des revendications 1 à 12, dans lequel l'appareil de communication (101) est un appareil d'impression.

14. Procédé de commande d'un appareil de traitement d'informations, le procédé comprenant :
l'acquisition de premières informations concernant un premier réseau, les premières informations étant des données transmises antérieurement à un autre appareil différent d'un appareil de communication (101) et différent de l'appareil de traitement d'informations (102), par l'appareil de traitement d'informations (102) ; et
l'exécution d'un processus prédéterminé configuré pour transmettre des deuxièmes informations concernant un second réseau à l'appareil de communication sur la base de la capacité de l'appareil de communication à communiquer avec un réseau à l'aide d'un deuxième paramètre différent d'un premier paramètre, dans le cas où le deuxième paramètre est un paramètre indiquant une méthode de chiffrement présentant une force de sécurité supérieure à celle d'une méthode de chiffrement indiquée par le premier paramètre, le premier paramètre étant un paramètre qui est indiqué par les premières informations acquises et destiné à être utilisé en communication avec le premier réseau, et le second réseau, qui constitue un point d'accès différent de l'appareil de traitement d'informations, étant un réseau différent du premier réseau et avec lequel l'appareil de traitement d'informations peut communiquer à l'aide du deuxième paramètre, dans lequel, dans le cas où les deuxièmes informations sont transmises à l'appareil de communication (101), l'appareil de communication (101) se connecte au second réseau à l'aide des deuxièmes informations.

15. Appareil de traitement d'informations (102) comprenant :
un moyen d'acquisition configuré pour acquérir des premières informations concernant un premier réseau, les premières informations étant des informations transmises antérieurement à un autre appareil différent d'un appareil de communication (101) et différent de l'appareil de traitement d'informations (102), par l'appareil de traitement d'informations (102) ; et
un moyen d'exécution configuré pour exécuter un processus prédéterminé de transmission de deuxièmes informations concernant un second réseau à l'appareil de communication sur la base de la capacité de l'appareil de communication à communiquer avec un réseau à l'aide d'un deuxième paramètre différent d'un premier paramètre, dans le cas où le deuxième paramètre est un paramètre indiquant une méthode de chiffrement présentant une force de sécurité supérieure à celle d'une méthode de chiffrement indiquée par le premier paramètre, le premier paramètre étant un paramètre qui est indiqué par les premières informations acquises et destiné à être utilisé en communication avec le premier réseau, et le second réseau, qui est un point d'accès différent de l'appareil de traitement d'informations, étant un réseau différent du premier réseau et avec lequel l'appareil de traitement d'informations peut communiquer à l'aide du deuxième paramètre, dans lequel, dans le cas où les deuxièmes informations sont transmises à l'appareil de communication (101), l'appareil de communication (101) se connecte au second réseau à l'aide des deuxièmes informations.
